# EUROPÄISCHE PATENTSCHRIFT

(11) **EP 0 416 433 B1**
(45) Veröffentlichungstag und Bekanntmachung des Hinweises auf die Patenterteilung: **30.03.1994**
(21) Anmeldenummer: 90116434.3
(22) Anmeldetag: 28.08.1990
(51) Int. Cl.: B60R 13/06, B60J 10/02

(54) **Dichtprofilleiste**
Profiled sealing strip
Bande d'étancheité profilée

(30) Priorität: 02.09.1989 DE 3929159
(43) Veröffentlichungstag der Anmeldung: 13.03.1991
(73) Patentinhaber: DRAFTEX INDUSTRIES LIMITED, Edinburgh, EH3 6YY, Scotland (GB)
(72) Erfinder: Vering, Heinz, D-58332 Schwelm (DE)
(74) Vertreter: Foster, David Martyn

(56) Entgegenhaltungen:
- EP-A- 0 086 959
- EP-A- 0 285 925
- GB-A- 226 679
- US-A- 3 371 447

## Beschreibung

Die Erfindung bezieht sich auf eine Dichtprofilleiste, insbesondere für Kraftfahrzeuge, die aus elastomeren und/oder thermoplastischen Materialien gebildet ist, zwei eingelagerte jeweils U-förmig profilierte Trägereinlagen aus Metall und weiterhin zwei U-förmige Öffnungen aufweist.

Dichtprofilleisten aus Gummi od. dgl. für z.B. Fahrzeuge, die eine eingelagerte Trägereinlage aufweisen, sind in den verschiedensten Ausführungsformen bekannt. Bei den Trägereinlagen kennt man Gitterbänder und Massivbänder. Bei Gitterbändern ist zumindest ein durchlaufender Steg, der ein- oder beidseitig mit nebeneinander angeordneten Zungen bzw. Sprossen verbunden ist, vorgesehen. Der Steg und die Zungen werden z.B. dadurch gebildet, daß aus einem bandförmigen Ausgangsmaterial fensterartige Öffnungen ausgestanzt werden. Die Gitterbänder werden sodann profiliert, z.B. U-förmig, und dann im Durchlaufverfahren mit Gummi od. dgl. umspritzt. Der Hauptnachteil derartig hergestellter Dichtprofilleisten ist in der unbefriedigenden Oberflächengüte derselben zu sehen. Bei Dichtprofilleisten mit darin eingelagerten z.B. U-förmig profilierten Massivbändern erreicht man den Vorteil einer glatten Oberfläche sowie den Vorteil einer oftmals erwünschten Stabilität. Jedoch weisen solche Dichtprofilleisten auch einen entscheidenden Nachteil auf, der darin zu sehen ist, daß sie zwecks Anpassung an die jeweiligen Fahrzeugkonturen streckgebogen werden müssen. Hierzu sind aufwendige Streckbiegevorrichtungen und ein erhöhter Materialeinsatz erforderlich. Insbesondere sind streckgebogene Dichtprofilleisten wegen ihrer Starrheit nicht geeignet, toleranzausgleichend zu wirken, so daß der Einsatz solcher Dichtprofilleisten zwangsläufig zu Funktionseinbußen und optisch wahrnehmbaren Mängeln führt.

Durch die EP-A- 00 86 959 ist zudem ein Dichtstreifen, der im Querschnitt aus einem biegesteiferen Halteabschnitt und einem flexibleren Dichtabschnitt zusammengesetzt ist, die zur Übertragung der Dichtkräfte vom Dichtabschnitt auf den Halteabschnitt fest miteinander verbunden sind und aus thermoplastischem Werkstoff mit einer metallischen Verstärkungseinlage bestehen, bekanntgeworden. Bei diesem bekannten Dichtstreifen ist vorgesehen, für den Halteabschnitt und für den Dichtabschnitt metallische Einlagen mit unterschiedlichen mechanischen Eigenschaften zu wählen, wobei die metallischen Einlagen jeweils aus zick-zack-förmig gebogenem Stahlband bestehen.

Der vorliegenden Erfindung liegt nun die Aufgabe zugrunde, eine Dichtprofilleiste der eingangs genannten Art zu schaffen, die einerseits den technischen Stabilitätsanforderungen genügt, d. h. hinreichend starr ist, die andererseits dennoch so biegeelastisch ist, daß sie ohne aufwendige Streckbiegeoperationen gebogen werden kann und die bei Gewährleistung einer einwandfreien Oberflächenbeschaffenheit geeignet ist, am Fahrzeug hinsichtlich Länge, Versatz und Konturenverlauf toleranzausgleichend zu wirken.

Erfindungsgemäß wird diese Aufgabe dadurch gelöst, daß die Trägereinlagen aus zwei profilierten Metallbändern bestehen, die jeweils einen durchlaufenden Steg mit einer Vielzahl von quer zur Steglängsachse abstandsfrei nebeneinander angeordneten, einstückig mit dem Steg verbundenen Zungen aufweisen, bereichsweise aneinanderliegen, zumindest bereichsweise über einen Verbund mit dem elastomeren Material aneinander festgelegt und dabei so gegeneinandergesetzt sind, daß die U-Öffnungen um etwa 90 ° zueinander versetzt sind.

Hinsichtlich der Maßnahme, die Zungen bzw. Sprossen abstandsfrei nebeneinander anzuordnen, wird von der Lehre der DE-A- 37 08 889 (EP-A-0 282 918) sowie von der Lehre der US-A- 3 371 447 Gebrauch gemacht.

Um einen Verbund der Metallbänder über das elastomere Material zu erzielen, kann in Ausgestaltung der Erfindung vorgesehen sein, daß die Metallbänder zumindest bereichsweise eine Haftvermittlerbeschichtung aufweisen. Eine andere oder auch zusätzliche Maßnahme kann darin bestehen, daß die Metallbänder im aneinanderliegenden Bereich gelocht oder perforiert sind.

Gemäß einer weiteren Ausgestaltung der Erfindung kann vorgesehen sein, daß die Metallbänder jeweils eine Umhüllung aus elastomeren Material aufweisen und gemeinsam mit der Umhüllung in der Dichtprofilleiste eingelagert sind.

Nach einer bevorzugten Weiterbildung der Erfindung sind die Metallbänder so geformt und aneinanderliegend in der Dichtprofilleiste angeordnet, daß sie miteinander bereichsweise ein kastenrohrartiges Profil bilden. Dabei sind die Metallbänder jeweils U-förmig profiliert und es ist vorgesehen, daß jeweils ein Schenkel der U-förmig profilierten und gegeneinander gesetzten Metallbänder einen nach außen abgewinkelten, freien Endbereich aufweist und daß die freien Enden dieser Endbereiche unter Bildung eines Kastenrohres gegeneinander gesetzt sind. Die kastenrohrartige Ausbildung ermöglicht es, im Gehrungsbereich zweier Dichtprofilleisten-Abschnitte Winkelstücke einzustecken, um auf diese Weise eine erhöhte Stabilität zu erzielen.

Ausführungsbeispiele der Erfindung werden nachfolgend anhand der Zeichnung näher erläutert. Es zeigen
- Fig. 1: einen Aufriß eines Dichtprofilleisten Zusammenbaus für einen oberen Teil einer Türrahmeneinfassung bei einem Kraftfahrzeug nebst Seitenansicht und Draufsicht,
- Fig. 2: einen Querschnitt durch eine Dichtprofilleiste gemäß einer ersten Ausführungsform der Erfindung etwa folgend der Linie A-A in Fig. 1 und
- Fig. 3: einen Querschnitt durch eine Dichtprofilleiste gemäß einer zweiten, bevorzugten Ausführungsform der Erfindung ebenfalls etwa folgend der Linie A-A in Fig. 1 im montierten Zustand.

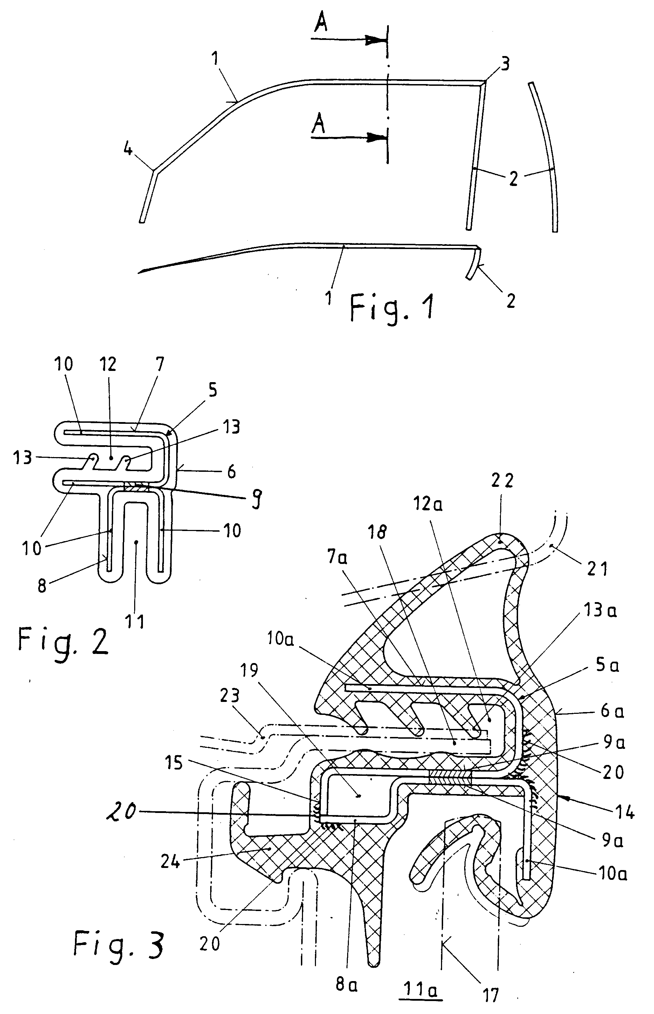

Der Dichtprofilleisten-Zusammenbau nach Fig. 1 besteht aus zumindest zwei Dichtprofilleisten-Abschnitten 1 und 2, die am Eckbereich 3 des Zusammenbaus beispielsweise durch Vulkanisation miteinander verbunden sind. Erforderlichenfalls kann auch im Bereich des Spiegeldreiecks 4 eine Dichtprofilleisten-Trennung mit Vulkanisationsstelle vorgesehen sein.

Fig. 1 zeigt den Dichtprofilleisten Zusammenbau, wie er üblicherweise konfektioniert und angeliefert wird und läßt erkennen, wie die Dichtprofilleisten-Abschnitte 1 und 2 in verschiedenen Ebenen gebogen sind, damit sie dem Konturenverlauf eines Kfz-Türrahmens entsprechen.

Fig. 2 zeigt einen Querschnitt durch ein erstes Ausführungsbeispiel einer erfindungsgemäßen Dichtprofilleiste in einer vereinfachten, mehr schematischen Darstellungsmanier. Die Dichtprofilleiste nach Fig. 2 besteht aus einer Trägereinlage 5 und aus einer diese einbettenden Umhüllung 6 aus elastomeren Material, vorzugsweise Gummi. Die Trägereinlage 5 besteht aus einem zweiteiligen Aufbau und ist aus zwei U-förmig profilierten Metallbändern 7, 8 gebildet. Jedes Metallband 7, 8 besitzt einen durchlaufenden Steg 9 mit daran abstandsfrei nebeneinander angeordneten Zungen 10, die durch Prägeschnittbearbeitung der Metallbänder 7, 8 und anschließendes Glattwalzen derselben gebildet sind. Die abstandsfreie Anordnung der einzelnen, nicht näher dargestellten Sprossen 10 ist wichtig, weil sich hierdurch eine glatte Außenfläche der Umhüllung 6 ohne Einfallstellen ergibt. Die U-förmig profilierten Metallbänder 7, 8 stehen in Berührungskontakt miteinander und sind so zueinander angeordnet, daß die U-Öffnungen 11, 12 um etwa 90 ° zueinander versetzt ausgerichtet sind. Die Umhüllung 6 ist so ausgeführt, daß die U-Öffnungen 11, 12 erhalten bleiben. Die U-Öffnung 11 ist beispielsweise zur Aufnahme einer Fensterscheibe (nicht gezeigt) und die U-Öffnung 12 ist beispielsweise zur Aufnahme eines nicht gezeigten Karosserie-oder Türrahmenflanschs bestimmt und weist in ihrem Innern Klemmlippen 13, die einem ungewollten Abziehen der Dichtprofilleiste vom Flansch entgegenwirken, auf.

Die Metallbänder 7, 8 sind ausschließlich durch Gummiverbund aneinanderfestgelegt, was dadurch realisiert sein kann, daß die Metallbänder 7, 8 zumindest bereichsweise beispielsweise in ihren gegenseitigen Anlagebereichen mit einem Haftvermittler beschichtet sind. Die Metallbänder werden also mit einer geeigneten Substanz, wie beispielsweise einem Lack vorbehandelt, wodurch das Haften von z. B. Gummi und Kautschukmaterialien sichergestellt ist, ohne daß die Metallbänder 7, 8 durchlöchert werden müßten, obgleich auch diese Möglichkeit bei der neuen Dichtprofilleiste gegeben ist. Der Gummi od. dgl. Materialverbund kann auch dadurch realisiert werden, daß um die Metallbänder 7, 8 herum jeweils eine dünne Haut aus z.B. elastomeren Material extrudiert wird und hierauf die Umhüllung 6 (z.B. PF/PP/Gummi usw.), die mit den Häuten eine innige Verbindung eingeht, extrudiert wird. Der Gummiverbund ermöglicht es, daß jedes Metallband 7 und 8 der Trägereinlage 5 in weiten Grenzen unabhängig vom anderen in mehreren Ebenen, d. h. um Biegungen in Längsrichtung der Dichtprofilleiste verformt werden kann.

Fig. 3 zeigt den Querschnitt durch eine als Fensterführungsprofil 14 ausgebildete Dichtprofilleiste. Die Dichtprofilleiste weist ein erstes profiliertes Metallband 7a und ein zweites profiliertes Metallband 8a auf. Die Metallbänder 7a und 8a stehen bereichsweise in Berührungskontakt miteinander und sie sind in einer Umhüllung 6a eingebettet, die auch den Gummiverbund zwischen den Metallbändern 7a und 8a sicherstellt. Die Metallbänder 7a und 8a sind vom Grundsatz her entsprechend dem Ausführungsbeispiel nach Fig. 2 ausgebildet und weisen daher jeweils einen durchlaufenden Steg 9a mit abstandsfrei daran nebeneinander angeördneten Zungen 10a auf.

Das Metallband 7a ist U-förmig profiliert, wobei ein Schenkel einen freien, nach außen abgewinkelten Endbereich 15 aufweist. Auch das Metallband 8a ist U-förmig profiliert und weist einen Schenkel mit einem nach außen abgewinkelten Endbereich 16 auf. Die Metallbänder 7a, 8a sind, ähnlich wie beim Ausführungsbeispiel nach Fig. 2 vorgesehen, so gegeneinandergesetzt in der Umhüllung 6a eingebettet, daß sich zwei um etwa 90 ° zueinander versetzte U-Öffnungen 11a, 12a, die auch in der Umhüllung 6a ausgebildet sind, ergeben. Die U-Öffnung 11a dient zur Aufnahme einer beweglichen Fensterscheibe 17 und die U-Öffnung 12a zur Halterung der Dichtprofilleiste an einem Türrahmenflansch 18, an dem Klemmlippen 13a der Umhüllung 6a zur Anlage kommen.

Wie Fig. 3 weiterhin zeigt, sind die Metallbänder 7a, 8a so im Umhüllungsmaterial eingebettet, daß die freien Enden der abgewinkelten Endbereiche 15, 16 aneinander stoßen, so daß die Metallbänder 7a, 8a, miteinander ein Kastenrohr 19 bilden. Hierdurch erhält die Trägereinlage 5a eine größere Steifigkeit ohne dabei die Fähigkeit zu verlieren, ohne Streckbiegeoperationen gebogen werden zu können; denn die einzelnen Metallbänder 7a, 8a bleiben unabhängig voneinander verformbar.

Die Metallbänder 7a, 8a sind durch Gummiverbund aneinander festgelegt. Mit kleinen gekrümmten Linien 20 ist beispielhaft angedeutet, in welchen Bereichen die Metallbänder 7a, 8a mit einem, einen Gummiverbund bewirkenden Haftvermittler versehen sein können.

Die Dichtprofilleiste nach Fig. 3 weist neben der U-Öffnung 11a, die eine Fensterscheibenführung bildet, einen gegen die Fahrzeugkarosserie 21 wirkenden Dichtteil 22 und einen in den Türrahmen 23 eingreifenden Verankerungsteil 24 auf, worauf nur der Vollständigkeit halber hingewiesen sein soll.

## Patentansprüche

1. Dichtprofilleiste, insbesondere für Kraftfahrzeuge, die aus elastomeren und/oder thermoplastischen Materialien gebildet ist, zwei eingelagerte jeweils U-förmig profilierte Trägereinlagen (5, 5a) aus Metall und weiterhin zwei U-förmige Öffnungen (11, 12, 11a, 12a) aufweist, dadurch gekennzeichnet, daß die Trägereinlagen (5, 5a) aus zwei profilierten Metallbändern (7, 8, 7a, 8a) bestehen, die jeweils einen durchlaufenden Steg (9, 9a) mit einer Vielzahl von quer zur Steglängsachse abstandsfrei nebeneinander angeordneten, einstückig mit dem Steg (9, 9a) verbundenen Zungen (10, 10a) aufweisen, bereichsweise aneinanderliegen, zumindest bereichsweise über einen Verbund mit dem elastomeren Material aneinander festgelegt und dabei so gegeneinandergesetzt sind, dß die U-Öffnungen (11, 12, 11a, 12a) um etwa 90 ° zueinander versetzt sind.

2. Dichtprofilleiste nach Anspruch 1, dadurch gekennzeichnet, daß die Metallbänder (7, 8, 7a, 8a) zumindest bereichsweise eine Haftvermittlerbeschichtung aufweisen.

3. Dichtprofilleiste, insbesondere nach Anspruch 1, dadurch gekennzeichnet, daß die Metallbänder (7, 8, 7a, 8a) im aneinanderliegenden Bereich gelocht oder perforiert sind.

4. Dichtprofilleiste, insbesondere nach Anspruch 1, dadurch gekennzeichnet, daß die Metallbänder (7, 8, 7a, 8a) jeweils eine Umhüllung aus elastomeren Material aufweisen und gemeinsam mit der Umhüllung in der Dichtprofilleiste eingelagert sind.

5. Dichtprofilleiste nach wenigstens einem der Ansprüche 1 bis 4, dadurch gekennzeichnet, daß die Metallbänder (7, 8, 7a, 8a) so geformt und aneinanderliegend in der Dichtprofilleiste angeordnet sind, daß sie miteinander bereichsweise ein kastenrohrartiges Profil bilden.

6. Dichtprofilleiste insbesondere nach den Ansprüchen 4 und 5, dadurch gekennzeichnet, daß jeweils ein Schenkel der U-förmig profilierten und gegeneinander gesetzten Metallbänder (7a, 8a) einen nach außen abgewinkelten, freien Endbereich (15, 16) aufweist und daß die freien Enden dieser Endbereiche (15, 16) unter Bildung eines Kastenrohres (19) gegeneinandergesetzt sind.

## Claims

1. A sealing section strip, especially for motor vehicles, which is formed from elastomeric and/or thermoplastic materials, and which has two embedded carrier inserts (5, 5a) of metal, in each case of U-shape profile, and in addition two U-shaped openings (11, 12, 11a, 12a), characterised in that, the carrier inserts (5,5a) comprise two profiled metal strips (7, 8, 7a, 8a), which in each case have a continuous portion (9, 9a) and a plurality of tongues (10, 10a) connected in one piece with the portions (9, 9a), arranged without spacing adjacent to each other transversely to the longitudinal axes of the portions, in the region of adjacency, are at least partially secured against each other by way of a binding with the elastomeric material and thereby are placed against each other such that the U-openings (11, 12, 11a, 12a) are oriented at an angle of approximately 90° relative to one another.

2. A sealing section strip according to Claim 1, characterised in that, the metal strips (7, 8, 7a, 8a) at least partially have a coating of adhesion agent.

3. A sealing section strip, especially according to Claim 1, characterised in that, the metal strips (7, 8, 7a, 8a) are pierced or perforated in the regions lying adjacent to each other.

4. A sealing section strip, especially according to Claim 1, characterised in that, the metal strips (7, 8, 7a, 8a) in each case have a covering of elastomeric material and are embedded in the sealing section strip together with the covering.

5. A sealing section strip according to at least one of Claims 1 to 4, characterised in that the metal strips (7, 8, 7a, 8a) are shaped and arranged lying adjacent to each other in the sealing section strip such that they partially form a profile with each other in the manner of a box pipe.

6. A sealing section strip especially according to Claims 4 and 5, characterised in that in each case a shank of the metal strips (7a, 8a) which are profiled in a U-shape and are placed against each other, has a free end region (15, 16) angled toward the exterior and that the free ends of these end regions are placed against each other, forming a box pipe (19).

## Revendications

1. Bande d'étanchéité profilée, en particulier pour véhicule automobile, qui est réalisée dans des matières élastomères et/ou thermoplastiques, qui présente deux armatures (5, 5a) en métal, profilées en U, intercalées, ainsi que deux ouvertures (11, 12, 11a, 12a) en U, caractérisée en ce que les armatures (5, 5a) sont réalisées dans deux bandes métalliques (7, 8, 7a, 8a) profilées, qui comportent chacune une âme (9, 9a) continue avec un grand nombre de languettes (10, 10a) juxtaposées, non espacées, s'étendant transversalement à l'axe longitudinal de l'âme, d'un seul tenant avec l'âme (9, 9a), qui s'appliquent par endroits l'une contre l'autre, qui sont fixées au moins par endroits l'une contre l'autre, par une liaison avec la matière élastomère et qui sont placées les unes par rapport aux autres de manière que les ouvertures en U (11, 12, 11a, 12a) soient décalées d'environ 90° les unes par rapport aux autres.

2. Bande d'étanchéité profilée selon la revendication 1, caractérisée en ce que les bandes métalliques (7, 8, 7a, 8a) présentent au moins par endroits un revêtement leur conférant une propriété adhésive.

3. Bande d'étanchéité profilée, en particulier selon la revendication 1, caractérisée en ce que les bandes métalliques (7, 8, 7a, 8a) sont trouées ou perforées dans leur zone d'application réciproque.

4. Bande d'étanchéité profilée, en particulier selon la revendication 1, caractérisée en ce que les bandes métalliques (7, 8, 7a, 8a) présentent chacune une gaine en matière élastomère et sont insérées avec la gaine dans la bande d'étanchéité profilée.

5. Bande d'étanchéité profilée selon l'une au moins des revendications 1 à 4, caractérisée en ce que les bandes métalliques (7, 8, 7a, 8a) sont formées et placées les unes contre les autres dans la bande profilée d'étanchéité de manière à définir entre elles, par endroits, un profilé en tube formant caisson.

6. Bande d'étanchéité profilée en particulier selon les revendications 4 et 5, caractérisée en ce qu'une branche des bandes métalliques (7a, 8a) profilées en U et placées les unes contre les autres, présente une zone terminale (15, 16) libre, coudée vers l'extérieur et en ce que les extrémités libres de ces zones terminales (15, 16) sont placées les unes contres les autres pour former un tube en caisson (19).
